# EUROPEAN PATENT SPECIFICATION

(11) **EP 3 007 450 B1**
(45) Date of publication and mention of the grant of the patent: **28.11.2018**
(21) Application number: 14807863.7
(22) Date of filing: 15.05.2014
(51) Int. Cl.: H04N 21/238, H04H 20/28, H04H 20/93, H04H 20/95, H04N 21/435, H04N 21/236, H04N 21/434, H04N 21/462, H04N 21/2381, H04N 21/858

(54) **TRANSMISSION DEVICE, TRANSMISSION METHOD, RECEIVING DEVICE, AND RECEIVING METHOD**
SENDEVORRICHTUNG, SENDEVERFAHREN, EMPFANGSVORRICHTUNG UND EMPFANGSVERFAHREN
DISPOSITIF DE TRANSMISSION, PROCÉDÉ DE TRANSMISSION, DISPOSITIF DE RÉCEPTION ET PROCÉDÉ DE RÉCEPTION

(30) Priority: 07.06.2013 JP 2013120319
(43) Date of publication of application: 13.04.2016
(73) Proprietor: Saturn Licensing LLC, New York, NY 10022-3211 (US)
(72) Inventor: DEWA, Yoshiharu, Tokyo 108-0075 (JP)
(74) Representative: Witte, Weller & Partner Patentanwälte mbB
(86) International application number: PCT/JP2014/062995
(87) International publication number: WO 2014/196335

(56) References cited:
- WO-A1-2013/161688
- JP-A- 2008 507 009
- US-A1- 2013 086 213
- US-A1- 2013 094 563
- Geneva Switzerland ET AL: "INTERNATIONAL ORGANIZATION FOR STANDARDIZATION ORGANISATION INTERNATIONALE DE NORMALISATION ISO/IEC JTC1/SC29/WG11 CODING OF MOVING PICTURES AND AUDIO ISO/IEC JTC1/SC29/WG11 MPEG/N13293 Title Text of ISO/IEC 2 nd CD 23008-1 MPEG Media Transport Status CD Source MPEG-H Systems", Gerard Fernando (ZTE), Jin Young Lee, 7 February 2013 (2013-02-07), XP055306397, Retrieved from the Internet: URL:http://mpeg.chiariglione.org/standards /mpeg-h/mpeg-media-transport/text-isoiec-2 nd-cd-23008-1-mpeg-media-transport [retrieved on 2016-09-28]
- TEXT OF ISO/IEC 2ND CD 23008-1 MPEG MEDIA TRANSPORT January 2013, GENEVA, SWITZERLAND, pages 12 - 23,99-100,50-51, XP030019366

## Description

### Technical Field

The present technology relates to a transmission apparatus, a transmission method, a reception apparatus, and a reception method, and more specifically to, a transmission apparatus and the like that transmit a transmission media stream containing transmission media such as video and audio.

### Background Art

As a transport system for the next generation broadcasting, a system defined by an MMT (MPEG Media Transport) has been recently attracting lots of attention. Regarding the MMT, for example, Non-patent Document 1 describes details thereof. The MMT defines not only the transport layer but also a data structure, which is called MMT-CI (Composition Information). The MMT-CI describes a screen configuration and a change by time. The MMT-CI configures presentation control information of transmission media such as video, audio, and images. The MMT-CI is described by an HTML5.

Non-patent Document 1: Study of ISO/IEC CD 23008-1 MPEG Media Transport, [online], [searched on May 7, 2013], Internet <URL: http://mpeg.chiariglione.org/standards/mpeg-h/mpeg-media-transport>

US 2013/0086213 A1 discloses a method that can efficiently transmit multimedia content on a package basis including various types of media such as content of movies, news, etc. The method includes generating a file with one or more packages including at least one asset, and transmitting the generated file to a terminal.

Geneva Switzerland ET AL, "INTERNATIONAL ORGANIZATION FOR STANDARDIZATION ORGANISATION INTERNATIONALE DE NORMALISATION ISO/IEC JTC1/SC29/WG11 CODING OF MOVING PICTURES AND AUDIO ISO/IEC JTC1/SC29/WG11 MPEG/N13293 Title Text of ISO/IEC 2 nd CD 23008-1 MPEG Media Transport Status CD Source MPEG-H Systems", Gerard Fernando (ZTE), Jin Young Lee, (20130207), URL: http://mpeg.chiariglione.org/standards/mpeg-h/mpeg-media-transport/text-isoiec-2nd-cd-23008-1-mpeg-media-transport, (20160928) discloses a working draft of a standard specifying MPEG Media Transport (MMT). The standard defines a encapsulation function including a logical model and its associated encapsulation format for timed and non-timed media content. The encapsulation format includes a self-contained encapsulation structure enabling independent consumption of media data, which hides codec specific details from the delivery function.

US 2013/0094563 A1 discloses a MMT transport packet structure and a corresponding method for configuring the structure. The method comprising configuring the MMT transport packet so that the MMT transport packet includes at least one MMT payload format unit and a sequence number field for a packet stream, wherein the sequence number field maintains consistency with a sequence number field included in the MMT payload format.

### Summary of Invention

### Problem to be solved by the Invention

In the case of the MMT, the MMT-CI described above is inserted into the transmission media stream together with the transmission media such as video and audio. For example, in the case of broadcasting, it is not known when a user starts receiving broadcast. Therefore, the MMT-CI is repeatedly inserted into the transmission media stream in relatively short cycles. The MMT-CI is data having a certain size. If the MMT-CI is inserted into the transmission media stream frequently, this has an influence on transmission efficiency. It should be noted that such inconvenience is not limited to the MMT-system transmission media stream. The same holds true for other transmission media streams containing presentation control information of the transmission media together with the transmission media such as video and audio.

It is an object of the present technology to achieve suppression of the data amount of a transmission media stream and reduction of bandwidth consumption.

### Means for solving the Problem

One concept of the present technology resides in a transmission apparatus according to claim 1.

Further, another concept of the present technology resides in a reception apparatus according to claim 6.

Further, embodiments of the present technology are disclosed in the dependent claims.

### Effect of the Invention

According to the present technology, it is possible to achieve suppression of the data amount of the transmission media stream and reduction of bandwidth consumption. It should be noted that the effects described in this specification are merely illustrative and not restrictive, and additional effects may also be produced.

### Brief Description of Drawings

[Fig. 1] Fig. 1 is a block diagram showing a configuration example of a display system as an embodiment.
[Fig. 2] Fig. 2 is a diagram showing a configuration of an MMT packet in the form of a tree.
[Fig. 3] Fig. 3 is a diagram showing an MMT-CI basic structure.
[Fig. 4] Fig. 4 is a diagram showing a structural example of an MMT composition information message (MCI_massage()), which is a message having an insertion area for MMT-CI.
[Fig. 5] Fig. 5 is a diagram showing a structural example of an MCI table (MCI_table).
[Fig. 6] Fig. 6 is a diagram showing an example of a mode indicated by "CI_mode".
[Fig. 7] Fig. 7 is a diagram showing an example of MMT-CI disposed as "CI_content" or MMT-CI acquired based on reference information disposed as "CI_content".
[Fig. 8] Fig. 8 is a diagram showing an example of an URL serving as reference information disposed as "CI_content".
[Fig. 9] Fig. 9 is a flowchart schematically showing an example of a processing procedure of a reception device.
[Fig. 10] Fig. 10 is a diagram showing an example of difference update information.

### Mode(s) for Carrying Out the Invention

Hereinafter, a form for carrying out the invention (hereinafter, called "embodiment") will be described. It should be noted that the description is provided in the following order.
1. Embodiment
2. Modified Examples

### <1. Embodiment>

### [Configuration Example of Display System]

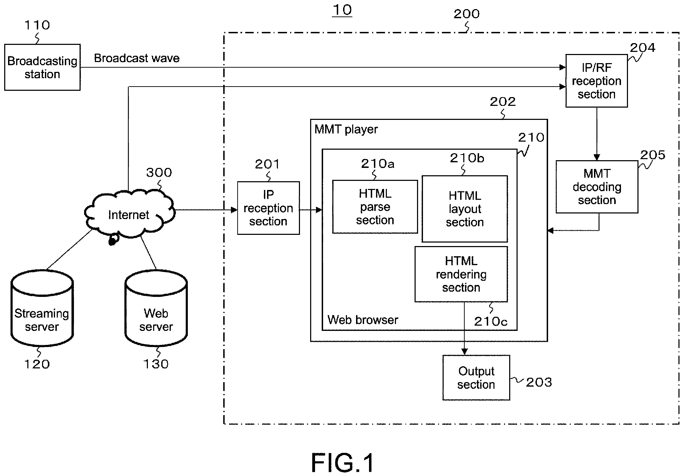

Fig. 1 shows a configuration example of a display system 10. In the display system 10, a broadcasting station 110, a streaming server 120, and a web server 130 are disposed on a transmission side, and a reception device 200 is disposed on a reception side.

The broadcasting station 110 generates a transmission media stream containing transport packets having an MMT structure (see ISO/IEC CD 23008-1), that is, MMT packets, and transmits the transmission media stream to the reception side through an RF transmission line. Hereinafter, the transmission media stream is appropriately called an "MMT stream". In this case, the broadcasting station 110 RF-modulates the MMT stream, for example, via an appropriate adaptation layer, and then transmits the resultant MMT stream to the reception side through the RF transmission line.

The streaming server 120 transmits an MMT stream that is similar to the MMT stream handled in the broadcasting station 110 described above, to the reception side through a communication network transmission line such as the Internet 300, for example. In this case, the streaming server 120 packetizes the MMT stream to be IP packets and transmits the IP packets to the reception side through the communication network transmission line.

In the MMT stream, a first MMT packet and a second MMT packet are multiplexed in at least a fragmented packet size on a time division basis. The first MMT packet contains transmission media such as video and audio in the payload. The second MMT packet contains information on the transmission media in the payload.

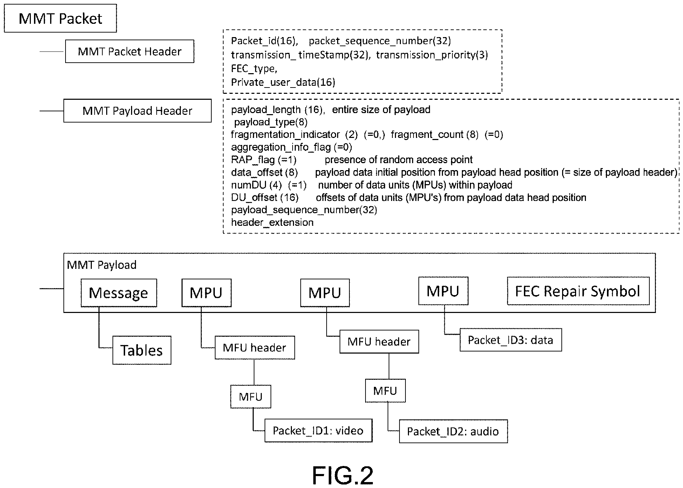

Fig. 2 shows a configuration of the MMT packet in the form of a tree. The MMT packet is configured by an MMT Packet Header, an MMT Payload Header, and an MMT Payload. The MMT Payload contains a Message, MPUs (Media Processing Units), an FEC Repair Symbol, and the like, and signaling thereof is performed by a payload type (payload_type) contained in the MMT Payload Header.

Here, the Message configures information on transmission media. Various types of content of messages are inserted into the Message in the form of tables. Further, the MPU may be fragmented and subdivided into MFUs (MMT Fragment Units). In such a case, an MFU Header is added to the head of each MFU. The MPUs contained in the MMT Payload include an MPU related to media data such as video, audio, and captions, and an MPU related to metadata. The MMT packets containing the MPUs are each identifiable by a packet ID (Packet_ID) that is present in the MMT Packet Header.

As one of the pieces of information on the transmission media, a data structure that is called MMT-CI (Composition Information) and describes a screen configuration and a change by time is defined. The MMT-CI configures presentation control information of the transmission media such as video, audio, and images. The MMT-CI is described by an HTML5.

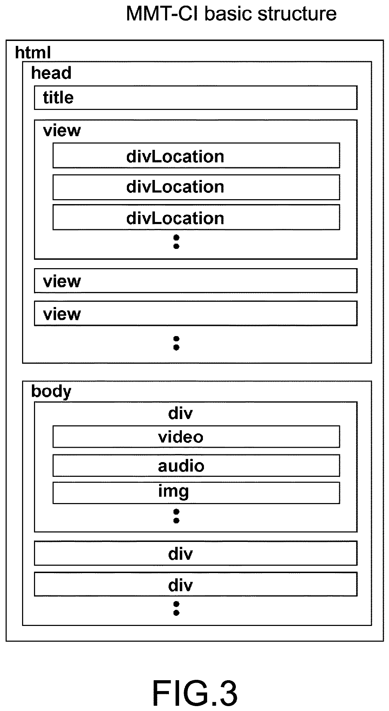

Fig. 3 shows an MMT-CI basic structure. A root element is "html" and includes a head element and a body element. The head element includes a plurality of view elements, in addition to a title element. Each of the view elements includes a plurality of divLocation elements. Further, the body element includes a plurality of div elements. In each div element, video (video), audio (audio), images (img), and the like can be placed. To specify an individual medium, a source element or an src attribute is used. The view element determines a display location of div of the body, but the initial location is determined by the divLocation element under the view element. The divLocation element sequentially indicates the display location that changes in chronological order. Thus, the display location changes according to the divLocation element without reloading pages.

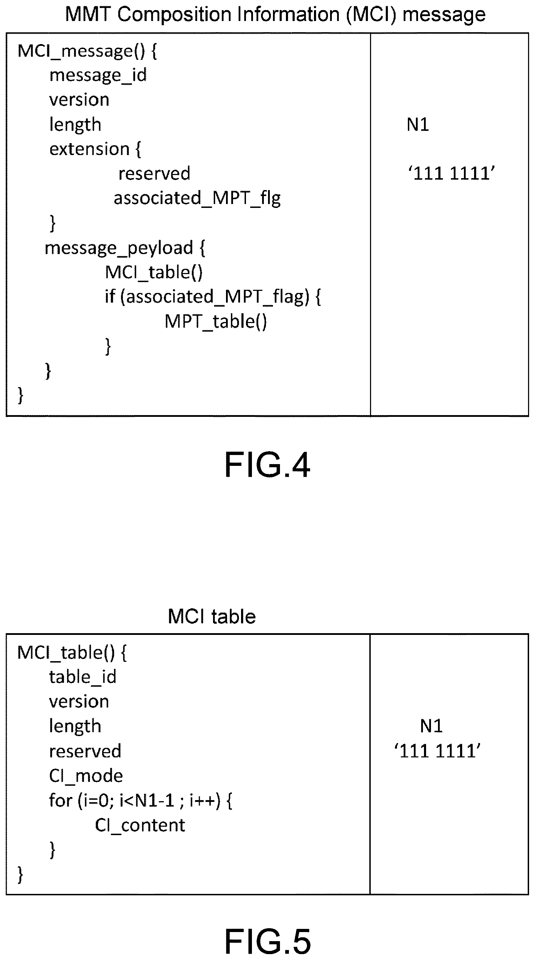

Fig. 4 shows a structural example (Syntax) of an MMT composition information message (MCI_massage()), which is a message having an insertion area for MMT-CI. The field of "message_id" indicates being an MCI message. The field of "version" indicates a version of the MCI message, and when the version is updated, the number is increased. The field of "length" indicates the size of the MCI message by a byte count. The field of "message_payload" includes an MCI table (MCI_table).

Fig. 5 shows a structural example (Syntax) of the MCI table (MCI_table). The field of "table_id" indicates the type of CI. "table_id = 0" indicates base CI, "table_id = 1-14" indicates subset CI, and "table_id = 15" indicates complete CI. The field of "version" indicates a version of the MCI table, and when the version is updated, the number is increased. In this case, the version substantially indicates a version of MMT-CI disposed as "CI_content" that will be described later, or a version of MMT-CI acquired by reference information disposed as "CI_content". Thus, whether there is a change in the MMT-CI or not can be known from the version.

The field of "CI_content" configures an insertion area for presentation control information. The field of "length" indicates the size of the field of "CI_content" by a byte count. In this embodiment, for "CI_content", MMT-CI or reference information for acquiring such MMT-CI (or an HTML file corresponding to such MMT-CI) is disposed. Here, an URL is disposed.

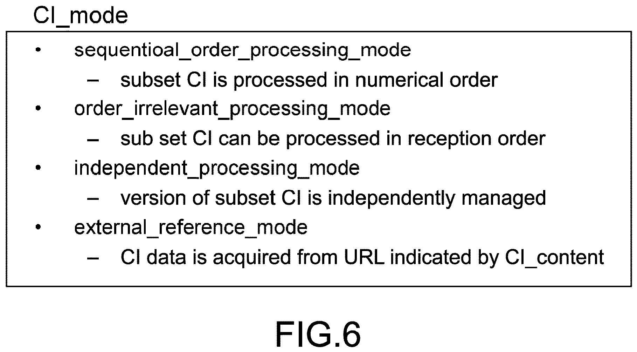

The field of "CI_mode" indicates a processing mode of the subset CI, or the like. Fig. 6 shows an example of "CI_mode".
"sequentioal_order_processing_mode" indicates that the subset CI is processed in numerical order.
"order_irrelevant_processing_mode" indicates that the subset CI can be processed in reception order.
"independent_processing_mode" indicates that the version of the subset CI is independently managed. In the modes described above, the MMT-CI is disposed as "CI_content".

Further, "external_reference_mode" indicates that the MMT-CI is acquired from an URL (Uniform Resource Locator) serving as reference information indicated by "CI_content". This mode (external reference mode) configures identification information for identifying reference information that is disposed as "CI_content". Therefore, in this mode, reference information for acquiring MMT-CI serving as "CI_content" is disposed. In this case, it is not necessary to acquire the MMT-CI itself by the reference information. An HTML file containing information corresponding to that MMT-CI may be acquired. Hereinafter, description will be given assuming that the MMT-CI itself is acquired by the reference information, for ease of explanation.

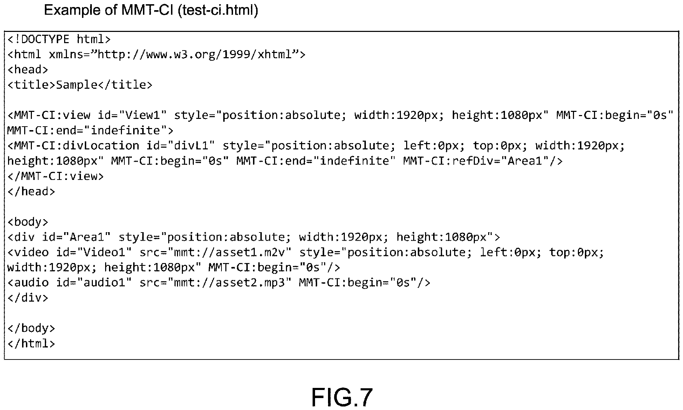

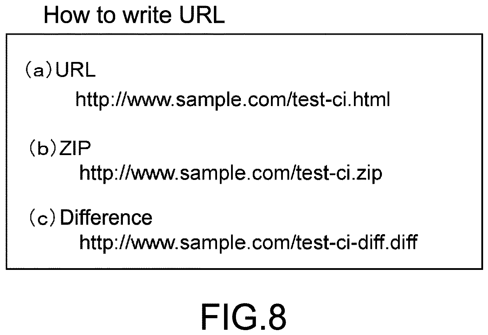

Fig. 7 shows an example of MMT-CI disposed as "CI_content" or MMT-CI acquired based on reference information disposed as "CI_content". An html element includes a head element and a body element. The head element includes a title element and a view element. The title element includes text data indicating a title. The view element includes one divLocation element. Further, the body element includes one div element. The div element includes a video element and an audio element. Fig. 8(a) shows an example of an URL disposed as reference information in "CI_content".

The broadcasting station 110 and the streaming server 120 configure a transmission section for a transmission media stream. Further, in the case where the reference information is disposed as "CI_content" as described above, the broadcasting station 110 and the streaming server 120 configure an information insertion section that inserts reference information into an insertion area for presentation control information of the transmission media, the reference information being for acquitting the presentation control information.

Referring back to Fig. 1, the web server 130 holds MMT-CI serving as presentation control information in a holding section such as a storage. In response to a request from the reception side, the web server 130 transmits the MMT-CI, which is held in the holding section, to the reception side by an IP transmission section through the communication network transmission line such as the Internet 300.

The reception device 200 includes an IP reception section 201, an MMT player 202, an output section 203, an IP/RF reception section 204, and an MMT decoding section 205. The IP/RF reception section 204 receives the MMT stream, which is transmitted from the broadcasting station 110 through the RF transmission line, after an analysis by the adaptation layer. Alternatively, the IP/RF reception section 204 receives the MMT stream, which is transmitted from the streaming server 120 through the communication network transmission line.

The MMT decoding section 205 unpacketizes MMT packets contained in the MMT stream received in the IP/RF reception section 204 and performs decoding processing, to acquire data such as video and audio that serve as media data, as well as metadata and messages. In this case, MMT-CI that describes a screen configuration and a change by time, or an URL serving as reference information for acquiring the MMT-CI is also obtained.

The IP reception section 201 communicates with the web server 130 through the Internet 300. When an URL for acquiring MMT-CI is obtained in the MMT decoding section 205, the IP reception section 201 accesses the web server 130 based on that URL and acquires MMT-CI, according to a request from the MMT player 202.

It should be noted that in this case, "CI_mode" of the MCI table (see Fig. 5) is "external_reference_mode", and thus the MMT player 202 identifies that reference information is disposed as "CI_content", and requests the IP reception section 201 to acquire MMT-CI. Thus, processing of acquiring MMT-CI based on the reference information is appropriately performed.

Further, in this case, when there is a change in the version indicated by "version" of the MCI table (see Fig. 5), the MMT player 202 requests the IP reception section 201 to acquire MMT-CI. Specifically, when the version is the same as the version of the last time, the processing of acquiring MMT-CI based on the reference information is omitted, and the processing is made more efficient.

The MMT player 202 includes a web browser 210. The web browser 210 includes an HTML parse section 210a, an HTML layout section 210b, and an HTML rendering section 210c. The HTML parse section 210a analyzes the MMT-CI obtained in the MMT decoding section 205 or an HTML5 document of the MMT-CI acquired from the web browser 130 in the IP reception section 201.

Based on a result of the analysis of the HTML parse section 210a, the HTML layout section 210b and the HTML rendering section 210c use data such as video and audio obtained in the MMT decoding section 205, to generate image and voice output data that corresponds to a screen configuration (layout), a change by time, and the like, which are specified by the MMT-CI.

The output section 203 performs image display and voice output based on the image and voice output data, which is generated in the MMT player 206. The output section is configured by a display that performs image display, a speaker that performs voice output, and the like.

The operation of the display system 10 shown in Fig. 1 will be simply described. An MMT stream is transmitted from the broadcasting station 110 to the reception side through an RF transmission line. Alternatively, an MMT stream is transmitted from the streaming server 120 to the reception side through a communication network transmission line such as the Internet 300.

The IP/RF reception section 204 of the reception device 200 receives the MMT stream transmitted from the broadcasting station 110 or the streaming server 120. The MMT stream is supplied to the MMT decoding section 205. The MMT decoding section 205 unpacketizes MMT packets contained in the MMT stream and further performs decoding processing, to obtain data such as video, audio, and images that serve as media data, as well as metadata and messages.

Further, in the MMT decoding section 205, MMT-CI that describes a screen configuration and a change by time, or an URL that serves as reference information for acquiring the MMT-CI is also obtained. Various types of data obtained in the MMT decoding section 205 are supplied to the MMT player 202.

When an URL for acquiring the MMT-CI is obtained in the MMT decoding section 205, acquiring the MMT-CI is requested from the MMT player 202 to the IP reception section 201. In response to the request, the IP reception section 201 accesses the web server 130 based on the URL and acquires the MMT-CI. The MMT-CI thus acquired is supplied to the MMT player 202.

In the HTML parse section 210a in the web browser 210 of the MMT player 202, the MMT-CI obtained in the MMT decoding section 205 or an HTML5 document of the MMT-CI acquired in the IP reception section 201 is analyzed. In the HTML layout section 210b and the HTML rendering section 210c in the web browser 210, the data such as video and audio obtained in the MMT decoding section 205 is then used to generate image and voice output data that corresponds to a screen configuration (layout), a change by time, and the like, which are specified by the MMT-CI.

In such a manner, the image and voice output data from the web browser 210 of the MMT player 202 is supplied to the output section 203. Based on the image and voice output data, the output section 203 performs the image display and the voice output that correspond to the screen configuration (layout), the change by time, and the like, which are specified by the MMT-CI.

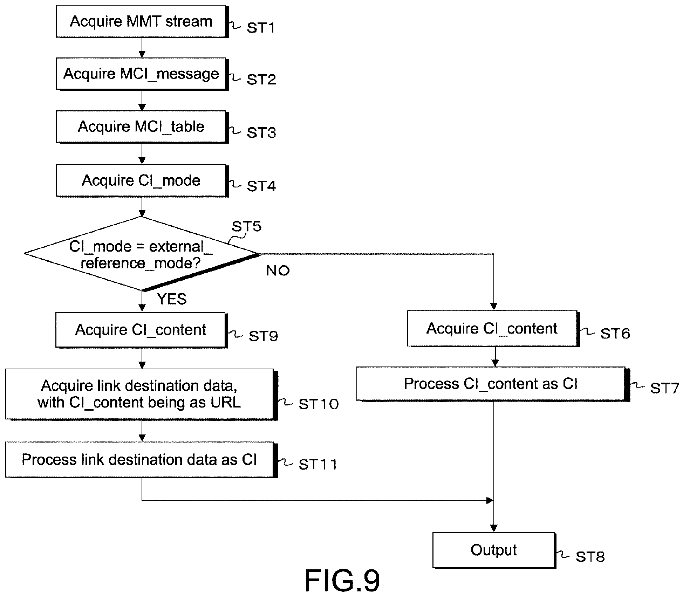

Fig. 9 is a flowchart schematically showing an example of a processing procedure of the reception device 200. First, the reception device 200 acquires an MMT stream in Step ST1. Next, the reception device 200 acquires "MCI_message" from the MMT stream in Step ST2, and acquires "MCI_table" from "MCI_message" in Step ST3. The reception device 200 then acquires "CI_mode" from "MCI_table" in Step ST4.

Next, the reception device 200 determines in Step ST5 whether "CI_mode" is "external_reference_mode" or not. When "CI_mode" is not "external_reference_mode", the reception device 200 moves to processing of Step ST6. In Step ST6, the reception device 200 acquires "CI_content" from "MCI_table".

Next, the reception device 200 processes "CI_content" to serve as MMT-CI in Step ST7, to acquire image and voice output data that corresponds to a screen configuration (layout), a change by time, and the like, which are specified by the MMT-CI. The reception device 200 then performs image display and voice output in Step ST8.

Further, when "CI_mode" is "external_reference_mode" in Step ST5, the reception device 200 moves to processing of Step ST9. In Step ST9, the reception device 200 acquires "CI_content" from "MCI_table". The reception device 200 then acquires, with "CI_content" being as an URL, link destination data from the web server 130 in Step ST10.

Next, the reception device 200 processes the link destination data serving as MMT-CI in Step ST11, and acquires image and voice output data that corresponds to a screen configuration (layout), a change by time, and the like, which are specified by the MMT-CI. The reception device 200 then performs image display and voice output in Step ST8.

As described above, in the display system 10 shown in Fig. 1, not the MMT-CI itself but the URL serving as reference information for acquiring that MMT-CI is inserted into the MMT stream transmitted from the broadcasting station 110 or the streaming server 120. Thus, it is possible to achieve suppression of the data amount of the MMT stream and reduction of bandwidth consumption.

Further, in the display system 10 shown in Fig. 1, "CI_mode" of the MCI table (see Fig. 5) is "external_reference_mode", and the reference information (for example, URL) is disposed as "CI_content". Thus, when "CI_mode" is "external_reference_mode", the MMT player 202 of the reception device 200 can identify that an URL (reference information) is disposed as "CI_content". Based on a result of the identification, the MMT player 202 requests the IP reception section 201 to acquire the MMT-CI by using the URL. Therefore, the reception device 200 can appropriately perform the processing of acquiring MMT-CI based on the reference information.

Further, in the display system 10 shown in Fig. 1, in the case where an URL is disposed in "CI_content", "version" of the MCI table (see Fig. 5) indicates a version of the MMT-CI acquired based on the URL. Thus, only when there is a change in a version indicated by "version", the MMT player 202 can request the IP reception section 201 to acquire MMT-CI. Therefore, in the reception device 200, when the version is the same as the version of the last time, the processing of acquiring MMT-CI based on the reference information can be omitted, and the processing can made more efficient.

### <2. Modified Example>

It should be noted that in the embodiment described above, the MMT-CI that is acquired by the IP reception section 201 of the reception device 200 from the web server 130 based on the URL (reference information) is an uncompressed HTML file. However, it is also possible to configure the IP reception section 201 of the reception device 200 so as to acquire a compressed HTML file from the web server 130 based on the URL (reference information), thus reducing the amount of received data. Fig. 8(b) shows an example of the URL (reference information) in such a case.

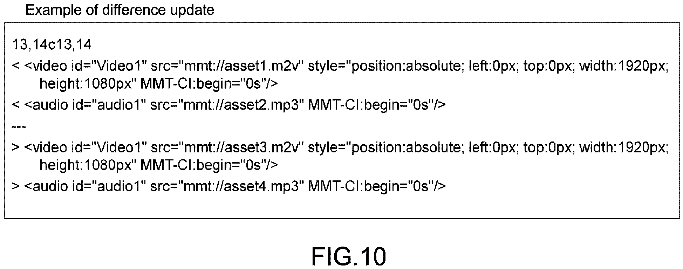

Further, similarly, to reduce the amount of received data, it is also possible to configure the IP reception section 201 of the reception device 200 so as to acquire only difference update information from the web server 130 based on the URL (reference information), each time there is a change in MMT-CI. Fig. 8(c) shows an example of the URL (reference information) in such a case. Further, Fig. 10 shows an example of the difference update information. This example shows HTML data before and after the update of MMT-CI on the 13rd and 14th lines.

Further, in the embodiment described above, the example in which the transmission media stream is an MMT stream has been shown. However, as a matter of course, the present technology can be similarly applied to a display system that handles a transmission media stream similar to the MMT stream.

Further, in the embodiment described above, the example in which the streaming server 120 and the web server 130 are separately present has been shown, but those servers may be configured as one server.

Further, in the embodiment described above, the example in which the reference information for acquiring MMT-CI is an URL and the MMT-CI is acquired from the web server 130 has been shown. However, the location for acquiring the MMT-CI is not limited to the web server 130.

Further, the present technology can have the following configurations.
(1) A transmission apparatus, including:
   a transmission section that transmits a transmission media stream to a reception side through a predetermined transmission line, the transmission media stream being obtained by multiplexing on a time division basis a first transmission packet containing transmission media in a payload and a second transmission packet containing information on the transmission media in a payload; and
   an information insertion section that inserts reference information into an insertion area for presentation control information of the transmission media, the reference information being for acquiring the presentation control information, the insertion area being provided in the payload of the second transmission packet.
(2) The transmission apparatus according to (1), in which
   the information insertion section inserts identification information into a predetermined area of the payload of the second transmission packet, the identification information being for identifying whether the reference information is inserted into the insertion area, the predetermined area corresponding to the insertion area.
(3) The transmission apparatus according to (1) or (2) in which
   the information insertion section inserts version information into a predetermined area of the payload of the second transmission packet, the version information indicating a version of the presentation control information acquired by the reference information inserted into the insertion area, the predetermined area corresponding to the insertion area.
(4) The transmission apparatus according to any one of (1) to (3), in which
   the reference information is an URL (Uniform Resource Locator) for acquiring the presentation control information from a web server.
(5) The transmission apparatus according to (4), in which
   the presentation control information acquired from the web server is an uncompressed HTML (Hypertext Markup Language) file or a compressed HTML file.
(6) The transmission apparatus according to any one of (1) to (5), in which
   each of the transmission packets is an MMT (MPEG Media Transport) packet, and
   the insertion area is an area of CI (Composition Information) content of an MCI (MMT Composition Information) table.
(7) A transmission method, including:
   transmitting a transmission media stream to a reception side through a predetermined transmission line, the transmission media stream being obtained by multiplexing on a time division basis a first transmission packet containing transmission media in a payload and a second transmission packet containing information on the transmission media in a payload; and
   inserting reference information into an insertion area for presentation control information of the transmission media, the reference information being for acquiring the presentation control information, the insertion area being provided in the payload of the second transmission packet.
(8) A reception apparatus, including:
   a reception section that receives a transmission media stream from a transmission side through a predetermined transmission line, the transmission media stream being obtained by multiplexing on a time division basis a first transmission packet containing transmission media in a payload and a second transmission packet containing information on the transmission media in a payload, the payload of the second transmission packet including an insertion area for presentation control information of the transmission media, reference information for acquiring the presentation control information being inserted into the insertion area;
   an information acquisition section that acquires the presentation control information based on the reference information inserted into the insertion area; and
   a presentation control section that performs presentation control of the transmission media, based on the acquired presentation control information.
(9) The reception apparatus according to (8), in which
   the payload of the second transmission packet includes a predetermined area corresponding to the insertion area, identification information for identifying whether the reference information is inserted into the insertion area being inserted into the predetermined area, and
   the information acquisition section acquires, when an insertion of the reference information into the insertion area is identified by the identification information, presentation control information of the transmission media based on the reference information inserted into the insertion area.
(10) The reception apparatus according to (8) or (9), in which
   the payload of the second transmission packet includes a predetermined area corresponding to the insertion area, version information indicating a version of the presentation control information acquired by the reference information inserted into the insertion area being inserted into the predetermined area, and
   the information acquisition section acquires, when there is a change in the version indicated by the version information, the presentation control information of the transmission media based on the reference information inserted into the insertion area.
(11) The reception apparatus according to any one of (8) to (10), in which
   the reference information is an URL for acquiring the presentation control information from a web server.
(12) The reception apparatus according to (11), in which
   the presentation control information acquired from the web server is an uncompressed HTML file or a compressed HTML file.
(13) The reception apparatus according to any one of (8) to (12), in which
   each of the transmission packets is an MMT packet, and
   the insertion area is an area of CI content of an MCI table.
(14) A reception method, including:
   receiving a transmission media stream from a transmission side through a predetermined transmission line, the transmission media stream being obtained by multiplexing on a time division basis a first transmission packet containing transmission media in a payload and a second transmission packet containing information on the transmission media in a payload, the payload of the second transmission packet including an insertion area for presentation control information of the transmission media, reference information for acquiring the presentation control information being inserted into the insertion area;
   acquiring the presentation control information of the transmission media based on the reference information inserted into the insertion area; and
   performing presentation control of the transmission media based on the acquired presentation control information.
(15) A reception apparatus, including:
   a reception section that receives a transmission media stream in which reference information for acquiring presentation control information of transmission media is embedded; and
   a processing section that processes the received transmission media stream.
(16) The reception apparatus according to (15), in which
   the processing section includes a web browser, the web browser acquiring the presentation control information from a web server based on the reference information and performing processing of presenting the transmission media.
(17) The reception apparatus according to (15) or (16), in which
   the transmission media stream includes a first transmission packet and a second transmission packet that are multiplexed on a time division basis, the first transmission packet containing the transmission media in a payload, the second transmission packet containing information on the transmission media in a payload, and
   the reference information is inserted into an insertion area for the presentation control information of the transmission media, the insertion area being provided in the payload of the second transmission packet.
(18) A display system, including a transmission apparatus and a reception apparatus that are connected to each other through a predetermined transmission line,
   the transmission apparatus including
   a transmission section that transmits a transmission media stream to the reception apparatus through the predetermined transmission line, the transmission media stream being obtained by multiplexing on a time division basis a first transmission packet containing transmission media in a payload and a second transmission packet containing information on the transmission media in a payload, and
   an information insertion section that inserts reference information into an insertion area for presentation control information of the transmission media, the reference information being for acquiring the presentation control information, the insertion area being provided in the payload of the second transmission packet,
   the reception apparatus including
   a reception section that receives the transmission media stream from the transmission apparatus through the predetermined transmission line,
   an information acquisition section that acquires the presentation control information based on the reference information inserted into the insertion area for the presentation control information of the transmission media, the insertion area being provided in the payload of the second transmission packet of the transmission media stream, and
   a presentation control section that performs presentation control of the transmission media contained in the first transmission packet of the transmission media stream, based on the acquired presentation control information.

A main feature of the present technology is to achieve suppression of the data amount of an MMT stream and reduction of bandwidth consumption by inserting not MMT-CI itself serving as presentation control information but reference information for acquiring the MMT-CI into the MMT stream serving as a transmission media stream (see Figs. 1 and 9). Description of Symbols

- 10: display system
- 110: broadcasting station
- 120: streaming server
- 130: web server
- 200: reception device
- 201: IP reception section
- 202: MMT player
- 203: output section
- 204: IP/RF reception section
- 205: MMT decoding section
- 210: web browser
- 210a: HTML parse section
- 210b: HTML layout section
- 210c: HTML rendering section
- 300: Internet

## Claims

1. A transmission apparatus, comprising:
a transmission section configured to transmit a transmission media stream to a reception side (200) through a predetermined transmission line, the transmission media stream being obtained by multiplexing on a time division basis a first transmission packet containing transmission media in a payload and a second transmission packet containing information on the transmission media in a payload;
**characterized by**
an information insertion section configured to insert either presentation control information of the transmission media or reference information for acquiring presentation control information into an insertion area, the insertion area being provided in the payload of the second transmission packet,
wherein the information insertion section is further configured to insert mode information into a predetermined area of the payload of the second transmission packet, the mode information identifying whether the insertion area includes presentation control information or reference information.

2. The transmission apparatus according to claim 1, wherein
the information insertion section is configured to insert version information into a predetermined area of the payload of the second transmission packet, the version information indicating a version of the presentation control information acquired by the reference information inserted into the insertion area, the predetermined area corresponding to the insertion area.

3. The transmission apparatus according to claim 1, wherein
the reference information is an URL (Uniform Resource Locator) for acquiring the presentation control information from a web server, and wherein, optionally,
the presentation control information acquired from the web server is an uncompressed HTML (Hypertext Markup Language) file or a compressed HTML file.

4. The transmission apparatus according to claim 1, wherein
each of the transmission packets is an MMT (MPEG Media Transport) packet, and
the insertion area is an area of CI (Composition Information) content of an MCI (MMT Composition Information) table.

5. A transmission method, comprising:
transmitting a transmission media stream to a reception side through a predetermined transmission line, the transmission media stream being obtained by multiplexing on a time division basis a first transmission packet containing transmission media in a payload and a second transmission packet containing information on the transmission media in a payload;
**characterized by**
inserting either presentation control information of the transmission media or reference information for acquiring the presentation control information into an insertion area, the insertion area being provided in the payload of the second transmission packet,
wherein the information insertion section is further configured to insert mode information into a predetermined area of the payload of the second transmission packet, the mode information identifying whether the insertion area includes presentation control information or reference information.

6. A reception apparatus, comprising:
a reception section configured to receive a transmission media stream from a transmission side (110, 120) through a predetermined transmission line, the transmission media stream being obtained by multiplexing on a time division basis a first transmission packet containing transmission media in a payload and a second transmission packet containing information on the transmission media in a payload,
**characterized by**
the payload of the second transmission packet including an insertion area for either presentation control information of the transmission media or reference information for acquiring presentation control information, and by
an information acquisition section configured to acquire the presentation control information based on the reference information inserted into the insertion area; and by
a presentation control section that performs presentation control of the transmission media contained in the first transmission packet, based on the acquired presentation control information,
wherein the payload of the second transmission packet includes in a predetermined area mode information for identifying whether the insertion area includes presentation control information or reference information, and
the information acquisition section is configured to acquire, when an insertion of the reference information into the insertion area is identified by the mode information, presentation control information of the transmission media based on the reference information inserted into the insertion area.

7. The reception apparatus according to claim 6, wherein
the payload of the second transmission packet includes a predetermined area corresponding to the insertion area, version information indicating a version of the presentation control information acquired by the reference information inserted into the insertion area being inserted into the predetermined area, and
the information acquisition section is configured to acquire, when there is a change in the version indicated by the version information, the presentation control information of the transmission media based on the reference information inserted into the insertion area.

8. The reception apparatus according to claim 6, wherein
the reference information is an URL for acquiring the presentation control information from a web server, and wherein, optionally,
the presentation control information acquired from the web server is an uncompressed HTML file or a compressed HTML file.

9. The reception apparatus according to claim 6, wherein
each of the transmission packets is an MMT packet, and
the insertion area is an area of CI content of an MCI table.

10. A reception method, comprising:
receiving a transmission media stream from a transmission side (110, 120) through a predetermined transmission line, the transmission media stream being obtained by multiplexing on a time division basis a first transmission packet containing transmission media in a payload and a second transmission packet containing information on the transmission media in a payload,
**characterized by**
the payload of the second transmission packet including an insertion area for either presentation control information of the transmission media or reference information for acquiring presentation control information, and by
acquiring the presentation control information of the transmission media based on the reference information inserted into the insertion area; and by
performing presentation control of the transmission media based on the acquired presentation control information,
wherein the payload of the second transmission packet includes in a predetermined area mode information for identifying whether the insertion area includes presentation control information or reference information, and
the information acquisition section acquires, when an insertion of the reference information into the insertion area is identified by the mode information, presentation control information of the transmission media based on the reference information inserted into the insertion area.

11. Reception method according to claim 10, wherein
the payload of the second transmission packet includes a predetermined area corresponding to the insertion area, version information indicating a version of the presentation control information acquired by the reference information inserted into the insertion area being inserted into the predetermined area, and
the information acquisition section acquires, when there is a change in the version indicated by the version information, the presentation control information of the transmission media based on the reference information inserted into the insertion area.

12. Reception method according to claim 10, wherein
the reference information is an URL for acquiring the presentation control information from a web server, and wherein, optionally,
the presentation control information acquired from the web server is an uncompressed HTML file or a compressed HTML file.

13. Reception method according to claim 10, wherein
each of the transmission packets is an MMT packet, and
the insertion area is an area of CI content of an MCI table.

## Patentansprüche

1. Eine Übertragungsvorrichtung, umfassend:
einen Übertragungsabschnitt, der konfiguriert ist, einen Übertragungsmedienstrom zu einer Empfangsseite (200) über eine vordefinierte Übertragungsleitung zu übertragen, wobei der Übertragungsmedienstrom erhalten wird, indem ein erstes Übertragungspaket mit Übertragungsmedien in einer Nutzlast und ein zweites Übertragungspaket mit Informationen über die Übertragungsmedien in einer Nutzlast zeitmultiplexiert werden;
**gekennzeichnet durch**
einen Informationseinfügungsabschnitt, der konfiguriert ist, entweder Präsentationssteuerinformationen der Übertragungsmedien oder Referenzinformationen zum Erfassen von Präsentationssteuerinformationen in einen Einfügungsbereich einzufügen, wobei der Einfügungsbereich in der Nutzlast des zweiten Übertragungspakets vorgesehen ist,
wobei der Informationseinfügungsabschnitt ferner konfiguriert ist, Modusinformationen in einen vorbestimmten Bereich der Nutzlast des zweiten Übertragungspakets einzufügen, wobei die Modusinformationen bestimmen, ob der Einfügungsbereich Präsentationssteuerinformationen oder Referenzinformationen beinhaltet.

2. Die Übertragungsvorrichtung nach Anspruch 1, wobei
der Informationseinfügungsabschnitt konfiguriert ist, Versionsinformationen in einen vorbestimmten Bereich der Nutzlast des zweiten Übertragungspakets einzufügen, wobei die Versionsinformationen eine Version der Präsentationssteuerinformationen angeben, die durch die in den Einfügungsbereich eingefügten Referenzinformationen erfasst wurden, wobei der vorbestimmte Bereich dem Einfügungsbereich entspricht.

3. Die Übertragungsvorrichtung nach Anspruch 1, wobei
die Referenzinformation eine URL (Uniform Resource Locator) zum Erfassen der Präsentationssteuerinformationen von einem Webserver ist, und wobei optional,
die von dem Webserver akquirierten Informationen zur Präsentationssteuerung eine unkomprimierte HTML-Datei (Hypertext Markup Language) oder eine komprimierte HTML-Datei sind.

4. Die Übertragungsvorrichtung nach Anspruch 1, wobei
jedes der Übertragungspakete ein MMT-Paket (MPEG Media Transport) ist, und der Einfügungsbereich ein Bereich des CI (Composition Information) Inhalts einer MCI (MMT Composition Information) Tabelle ist.

5. Übertragungsverfahren, umfassend:
Übertragen eines Übertragungsmedienstroms zu einer Empfangsseite über eine vordefinierte Übertragungsleitung, wobei der Übertragungsmedienstrom erhalten wird, indem ein erstes Übertragungspaket mit Übertragungsmedien in einer Nutzlast und ein zweites Übertragungspaket mit Informationen über die Übertragungsmedien in einer Nutzlast zeitmultiplexiert werden;
**gekennzeichnet durch**
Einfügen von entweder Präsentationssteuerinformationen der Übertragungsmedien oder Referenzinformationen zum Erfassen der Präsentationssteuerinformationen in einen Einfügungsbereich, wobei der Einfügungsbereich in der Nutzlast des zweiten Übertragungspakets vorgesehen ist,
wobei der Informationseinfügungsabschnitt ferner konfiguriert ist, Modusinformationen in einen vorbestimmten Bereich der Nutzlast des zweiten Übertragungspakets einzufügen, wobei die Modusinformationen bestimmen, ob der Einfügungsbereich Präsentationssteuerinformationen oder Referenzinformationen beinhaltet.

6. Empfangsvorrichtung, umfassend:
einen Empfangsabschnitt, der konfiguriert ist, einen Übertragungsmedienstrom von einer Sendeseite (110, 120) über eine vordefinierte Übertragungsleitung zu empfangen, wobei der Übertragungsmedienstrom erhalten wird, indem ein erstes Übertragungspaket mit Übertragungsmedien in einer Nutzlast und ein zweites Übertragungspaket mit Informationen über die Übertragungsmedien in einer Nutzlast zeitmultiplexiert werden,
**dadurch gekennzeichnet, dass**
die Nutzlast des zweiten Übertragungspakets einen Einfügungsbereich für entweder Präsentationssteuerinformationen der Übertragungsmedien oder Referenzinformationen zum Erfassen von Präsentationssteuerinformationen beinhaltet, und durch
einen Informationserfassungsabschnitt, der konfiguriert ist, die Präsentationssteuerinformationen basierend auf den in den Einfügungsbereich eingefügten Referenzinformationen zu erfassen; und durch
einen Präsentationssteuerabschnitt, der eine Präsentationssteuerung der im ersten Übertragungspaket enthaltenen Übertragungsmedien basierend auf den erfassten Präsentationssteuerinformationen durchführt,
wobei die Nutzlast des zweiten Übertragungspakets in einem vorbestimmten Bereich Modusinformationen beinhaltet zum Bestimmen, ob der Einfügungsbereich Präsentationssteuerinformationen oder Referenzinformationen beinhaltet, und
der Informationserfassungsabschnitt konfiguriert ist, Präsentationssteuerinformationen der Übertragungsmedien basierend auf den in den Einfügungsbereich eingefügten Referenzinformationen zu erfassen, wenn durch die Modusinformationen bestimmt wird, dass Referenzinformationen in den Einfügungsbereich eingefügt sind.

7. Die Empfangsvorrichtung nach Anspruch 6, wobei
die Nutzlast des zweiten Übertragungspakets einen dem Einfügungsbereich entsprechenden, vorbestimmten Bereich beinhaltet, wobei Versionsinformationen eine Version der Präsentationssteuerinformationen angeben, die von den in dem Einfügungsbereich eingefügten Referenzinformationen erfasst werden, die in den vorbestimmten Bereich eingefügt sind, und
der Informationserfassungsabschnitt konfiguriert ist, bei einer Änderung der durch die Versionsinformationen angegebenen Version die Präsentationssteuerinformationen der Übertragungsmedien basierend auf den in den Einfügungsbereich eingefügten Referenzinformationen zu erfassen.

8. Die Empfangsvorrichtung nach Anspruch 6, wobei
die Referenzinformation eine URL zum Erfassen der Präsentationssteuerungsinformationen von einem Webserver ist, und wobei optional,
die vom Webserver akquirierten Informationen zur Präsentationssteuerung eine unkomprimierte HTML-Datei oder eine komprimierte HTML-Datei sind.

9. Die Empfangsvorrichtung nach Anspruch 6, wobei
jedes der Übertragungspakete ein MMT-Paket ist, und
der Einfügungsbereich ein Bereich des CI-Inhalts einer MCI-Tabelle ist.

10. Empfangsverfahren, umfassend:
Empfangen eines Übertragungsmedienstroms von einer Sendeseite (110, 120) über eine vordefinierte Übertragungsleitung, wobei der Übertragungsmedienstrom erhalten wird, indem ein erstes Übertragungspaket mit Übertragungsmedien in einer Nutzlast und ein zweites Übertragungspaket mit Informationen über die Übertragungsmedien in einer Nutzlast zeitmultiplexiert werden,
**dadurch gekennzeichnet, dass**
die Nutzlast des zweiten Übertragungspakets einen Einfügungsbereich für entweder Präsentationssteuerinformationen der Übertragungsmedien oder Referenzinformationen zum Erfassen von Präsentationssteuerinformationen beinhaltet, und durch
Erfassen der Präsentationssteuerinformationen der Übertragungsmedien basierend auf den in den Einfügungsbereich eingefügten Referenzinformationen; und durch
Durchführen einer Präsentationssteuerung der Übertragungsmedien basierend auf den erfassten Präsentationssteuerinformationen,
wobei die Nutzlast des zweiten Übertragungspakets in einem vorbestimmten Bereich Modusinformationen beinhaltet zum Bestimmen, ob der Einfügungsbereich Präsentationssteuerinformationen oder Referenzinformationen beinhaltet, und
der Informationserfassungsabschnitt Präsentationssteuerinformationen der Übertragungsmedien basierend auf den in den Einfügungsbereich eingefügten Referenzinformationen erfasst, wenn durch die Modusinformationen bestimmt wird, dass Referenzinformationen in den Einfügungsbereich eingefügt sind.

11. Empfangsverfahren nach Anspruch 10, wobei
die Nutzlast des zweiten Übertragungspakets einen dem Einfügungsbereich entsprechenden, vorbestimmten Bereich beinhaltet, wobei Versionsinformationen eine Version der Präsentationssteuerinformationen angeben, die von den in den Einfügungsbereich eingefügten Referenzinformationen erfasst werden, die in den vorbestimmten Bereich eingefügt sind, und
der Informationserfassungsabschnitt bei einer Änderung der durch die Versionsinformationen angegebenen Version die Präsentationssteuerinformationen der Übertragungsmedien basierend auf den in den Einfügungsbereich eingefügten Referenzinformationen erfasst.

12. Empfangsverfahren nach Anspruch 10, wobei
die Referenzinformation eine URL zum Erfassen der Präsentationssteuerungsinformationen von einem Webserver ist, und wobei optional,
die vom Webserver akquirierten Informationen zur Präsentationssteuerung eine unkomprimierte HTML-Datei oder eine komprimierte HTML-Datei sind.

13. Empfangsverfahren nach Anspruch 10, wobei
jedes der Übertragungspakete ein MMT-Paket ist, und
der Einfügungsbereich ein Bereich des CI-Inhalts einer MCI-Tabelle ist.

## Revendications

1. Appareil de transmission, comprenant :
une section de transmission configurée pour transmettre un flux multimédia de transmission à un côté de réception (200) par l'intermédiaire d'une ligne de transmission prédéterminée, le flux multimédia de transmission étant obtenu en multiplexant sur une base de répartition dans le temps un premier paquet de transmission contenant des données multimédia de transmission dans un champ de données utiles et un deuxième paquet de transmission contenant des informations sur les données multimédia de transmission dans un champ de données utiles ;
**caractérisé par**
une section d'insertion d'informations configurée pour insérer des informations de contrôle de présentation des données multimédia de transmission ou des informations de référence pour acquérir des informations de contrôle de présentation dans une zone d'insertion, la zone d'insertion étant fournie dans le champ de données utiles du deuxième paquet de transmission,
la section d'insertion d'informations étant en outre configurée pour insérer des informations de mode dans une zone prédéterminée du champ de données utiles du deuxième paquet de transmission, les informations de mode identifiant si la zone d'insertion comporte des informations de contrôle de présentation ou des informations de référence.

2. Appareil de transmission selon la revendication 1, dans lequel :
la section d'insertion d'informations est configurée pour insérer des informations de version dans une zone prédéterminée du champ de données utiles du deuxième paquet de transmission, les informations de version indiquant une version des informations de contrôle de présentation acquises par les informations de référence insérées dans la zone d'insertion, la zone prédéterminée correspondant à la zone d'insertion.

3. Appareil de transmission selon la revendication 1, dans lequel :
les informations de référence sont une URL (localisateur uniforme de ressources) permettant d'acquérir les informations de contrôle de présentation à partir d'un serveur Web, et optionnellement,
les informations de contrôle de présentation acquises à partir du serveur Web étant un fichier HTML (langage de balisage hypertexte) non compressé ou un fichier HTML compressé.

4. Appareil de transmission selon la revendication 1, dans lequel :
chacun des paquets de transmission est un paquet MMT (transport multimédia MPEG), et
la zone d'insertion est une zone de contenu CI (informations de composition) d'une table MCI (informations de composition MMT).

5. Procédé de transmission, comprenant :
transmettre un flux multimédia de transmission à un côté de réception par l'intermédiaire d'une ligne de transmission prédéterminée, le flux multimédia de transmission étant obtenu en multiplexant sur une base de répartition dans le temps un premier paquet de transmission contenant des données multimédia de transmission dans un champ de données utiles et un deuxième paquet de transmission contenant des informations sur les données multimédia de transmission dans un champ de données utiles ;
**caractérisé par**
insérer des informations de contrôle de présentation des données multimédia de transmission ou des informations de référence pour acquérir les informations de contrôle de présentation dans une zone d'insertion, la zone d'insertion étant fournie dans le champ de données utiles du deuxième paquet de transmission,
la section d'insertion d'informations étant en outre configurée pour insérer des informations de mode dans une zone prédéterminée du champ de données utiles du deuxième paquet de transmission, les informations de mode identifiant si la zone d'insertion comporte des informations de contrôle de présentation ou des informations de référence.

6. Appareil de réception, comprenant :
une section de réception configurée pour recevoir un flux multimédia de transmission à partir d'un coté de transmission (110, 120) par l'intermédiaire d'une ligne de transmission prédéterminée, le flux multimédia de transmission étant obtenu en multiplexant sur une base de répartition dans le temps un premier paquet de transmission contenant des données multimédia de transmission dans un champ de données utiles et un deuxième paquet de transmission contenant des informations sur les données multimédia de transmission dans un champ de données utiles,
**caractérisé par**
le champ de données utiles du deuxième paquet de transmission comportant une zone d'insertion pour des informations de contrôle de présentation des données multimédia de transmission ou des informations de référence pour acquérir des informations de contrôle de présentation, et par
une section d'acquisition d'informations configurée pour acquérir les informations de contrôle de présentation sur la base des informations de référence insérées dans la zone d'insertion ; et par
une section de contrôle de présentation qui exécute un contrôle de présentation des données multimédia de transmission contenues dans le premier paquet de transmission, sur la base des informations de contrôle de présentation acquises,
le champ de données utiles du deuxième paquet de transmission comportant dans une zone prédéterminée des informations de mode permettant d'identifier si la zone d'insertion renferme des informations de contrôle de présentation ou des informations de référence, et
la section d'acquisition d'informations étant configurée pour acquérir, lorsqu'une insertion des informations de référence dans la zone d'insertion est identifiée par les informations de mode, des informations de contrôle de présentation des données multimédia de transmission sur la base des informations de référence insérées dans la zone d'insertion.

7. Appareil de réception selon la revendication 6, dans lequel :
le champ de données utiles du deuxième paquet de transmission comporte une zone prédéterminée correspondant à la zone d'insertion, des informations de version indiquant une version des informations de contrôle de présentation acquises par les informations de référence insérées dans la zone d'insertion qui ont été insérées dans la zone prédéterminée, et
la section d'acquisition d'informations est configurée pour acquérir, lorsqu'il y a un changement dans la version indiquée par les informations de version, les informations de contrôle de présentation des données multimédia de transmission sur la base des informations de référence insérées dans la zone d'insertion.

8. Appareil de réception selon la revendication 6, dans lequel :
les informations de référence sont une URL permettant d'acquérir les informations de contrôle de présentation à partir d'un serveur Web, et optionnellement,
les informations de contrôle de présentation acquises à partir du serveur Web étant un fichier HTML non compressé ou un fichier HTML compressé.

9. Appareil de réception selon la revendication 6, dans lequel :
chacun des paquets de transmission est un paquet MMT, et
la zone d'insertion est une zone de contenu CI d'une table MCI.

10. Procédé de réception, comprenant :
recevoir un flux multimédia de transmission à partir d'un coté de transmission (110, 120) par l'intermédiaire d'une ligne de transmission prédéterminée, le flux multimédia de transmission étant obtenu en multiplexant sur une base de répartition dans le temps un premier paquet de transmission contenant des données multimédia de transmission dans un champ de données utiles et un deuxième paquet de transmission contenant des informations sur les données multimédia de transmission dans un champ de données utiles,
**caractérisé par**
le champ de données utiles du deuxième paquet de transmission comportant une zone d'insertion pour des informations de contrôle de présentation des données multimédia de transmission ou des informations de référence pour acquérir des informations de contrôle de présentation, et par
acquérir les informations de contrôle de présentation des données multimédia de transmission sur la base des informations de référence insérées dans la zone d'insertion ; et par
exécuter un contrôle de présentation des données multimédia de transmission sur la base des informations de contrôle de présentation acquises,
le champ de données utiles du deuxième paquet de transmission comportant dans une zone prédéterminée des informations de mode permettant d'identifier si la zone d'insertion renferme des informations de contrôle de présentation ou des informations de référence, et
la section d'acquisition d'informations acquérant, lorsqu'une insertion des informations de référence dans la zone d'insertion est identifiée par les informations de mode, des informations de contrôle de présentation des données multimédia de transmission sur la base des informations de référence insérées dans la zone d'insertion.

11. Procédé de réception selon la revendication 10, dans lequel :
le champ de données utiles du deuxième paquet de transmission comporte une zone prédéterminée correspondant à la zone d'insertion, des informations de version indiquant une version des informations de contrôle de présentation acquises par les informations de référence insérées dans la zone d'insertion qui ont été insérées dans la zone prédéterminée, et
la section d'acquisition d'informations acquiert, lorsqu'il y a un changement dans la version indiquée par les informations de version, les informations de contrôle de présentation des données multimédia de transmission sur la base des informations de référence insérées dans la zone d'insertion.

12. Procédé de réception selon la revendication 10, dans lequel :
les informations de référence sont une URL permettant d'acquérir les informations de contrôle de présentation à partir d'un serveur Web, et optionnellement,
les informations de contrôle de présentation acquises à partir du serveur Web étant un fichier HTML non compressé ou un fichier HTML compressé.

13. Procédé de réception selon la revendication 10, dans lequel :
chacun des paquets de transmission est un paquet MMT, et
la zone d'insertion est une zone de contenu CI d'une table MCI.
